# EUROPEAN PATENT APPLICATION

(11) **EP 4 379 389 A1**
(43) Date of publication of application: **05.06.2024**
(21) Application number: 22849015.7
(22) Date of filing: 30.05.2022
(51) Int. Cl.: G01N 35/00

(54) **AUTOMATIC ANALYSIS DEVICE AND REAGENT MANAGEMENT METHOD**

(30) Priority: 27.07.2021 JP 2021122733
(71) Applicant: HITACHI HIGH-TECH CORPORATION, Tokyo 105-6409 (JP)
(72) Inventor: SHIMIZU, Kanoh, Tokyo 105-6409 (JP)
(74) Representative: MERH-IP Matias Erny Reichl Hoffmann Patentanwälte PartG mbB
(86) International application number: PCT/JP2022/021866
(87) International publication number: WO 2023/007936

(57) **Abstract**

To reliably prevent an analysis using a problematic reagent. In order to implement this, an automatic analyzer according to the disclosure includes: a reagent placement unit in which a reagent container containing a reagent is placed; a processor configured to process reagent information related to the reagent; a memory configured to store the reagent information; and a display device configured to display the reagent information. The processor causes the display device to display a GUI screen configured to allow setting of usability of both a reagent placed in the reagent placement unit and a reagent not placed in the reagent placement unit, and causes the memory to store information received from the GUI screen and related to the usability of the reagent (see FIG. 3).

## Description

### Technical Field

The present disclosure relates to an automatic analyzer and a reagent management method.

### Background Art

In an inspection facility for analyzing a sample using a reagent in an automatic analyzer, as one of measures for securing analysis accuracy, it is required to manage information such as a storage method, an opening date and time, a disposal date and time, a lot, and an in-stock quantity of a reagent to be used for measurement and to use the reagent under appropriate management.

As a technique of supporting appropriate management and operation of a reagent, PTL 1 discloses a technique in which "A storage device in an automatic analyzer includes an in-mount reagent information table for storing reagent information currently mounted on the device, and a reagent ledger table for storing all reagent information recognized by the device once in the past. Since the information on the reagent ledger table can be displayed in a table format on a screen of the automatic analyzer, when the reagent is a reagent that the device has recognized once, it is possible to know not only information on the reagent currently mounted on the device but also information on a reagent removed from the device and stored in another storage" (see Abstract of PTL 1).

An inspection technician who uses an automatic analyzer may confirm an inspection result and a reaction process for a reagent mounted on the automatic analyzer and in use, and may determine an abnormality even when the automatic analyzer cannot automatically determine an abnormality. In this manner, as a technique in which a reagent is designated and is unusable in an automatic analyzer, PTL 2 discloses a technique in which "a control unit causes a display unit to display a screen indicating information on a reagent 207 to be used in an analysis of a sample 202, inputs a mask instruction for the reagent 207 that is operated based on the display screen, performs mask designation on the reagent 207 based on the received mask instruction for the reagent 207, and does not use the mask-designated reagent 207 in the analysis of the sample 202" (see Abstract of PTL 2).

### Citation List

### Patent Literature

PTL 1: JP2010-256051A
PTL 2: JP2012-251909A

### Summary of Invention

### Technical Problem

However, in PTL 1 and PTL 2, the reagent removed from the automatic analyzer cannot be set to be unusable. Therefore, for example, even when the reagent removed from the automatic analyzer is found to be problematic due to an inappropriate storage method or the like, a third party who does not know the problem may place the reagent on the automatic analyzer and use the reagent for an analysis.

In the automatic analyzers in PTL 1 and PTL 2, it is not possible to determine that a reagent that has never been registered in the automatic analyzer is unusable. Therefore, even when the reagent is found to be problematic before being used in the automatic analyzer, for example, when it is reported that there is a problem in the lot of the reagent delivered from a reagent manufacturer, the reagent may be placed on the automatic analyzer and used for an analysis. When a sample is analyzed using the problematic reagent, the analysis accuracy may decrease.

Therefore, the disclosure provides a technique of reliably preventing an analysis using a problematic reagent.

### Solution to Problem

In order to solve the above problem, an automatic analyzer according to the disclosure includes: a reagent placement unit in which a reagent container containing a reagent is placed; a processor configured to process reagent information related to the reagent; a memory configured to store the reagent information; and a display device configured to display the reagent information. The processor causes the display device to display a GUI screen configured to allow setting of usability of both a reagent placed in the reagent placement unit and a reagent not placed in the reagent placement unit, and causes the memory to store information received from the GUI screen and related to the usability of the reagent.

Additional features related to the disclosure will be I clarified from the description of the present specification and the accompanying drawings. Aspects of the disclosure are achieved and implemented using elements, combinations of various elements, the following detailed description, and the appended claims. The description of the specification is merely a typical example, and does not limit the scope of the claims or application examples of the disclosure in any sense.

### Advantageous Effects of Invention

According to the technique of the disclosure, it is possible to reliably prevent an analysis using a problematic reagent. Problems, configurations, and effects other than those described above will be clarified by description of the following embodiments.

### Brief Description of Drawings

[FIG. 1A] FIG. 1A is a schematic view illustrating a configuration example of an automatic analyzer.
[FIG. 1B] FIG. 1B is a diagram illustrating a hardware configuration of a control device.
[FIG. 2A] FIG. 2A is a schematic view illustrating a configuration example of a reagent container.
[FIG. 2B] FIG. 2B is a schematic view illustrating a configuration example of a reagent placement mechanism.
[FIG. 3] FIG. 3 is a schematic diagram illustrating an example of a reagent information management screen for setting usability of a specific reagent.
[FIG. 4] FIG. 4 is a schematic diagram illustrating an example of a management screen for managing conditions of a reagent.to be set as unusable.
[FIG. 5] FIG. 5 is a flowchart illustrating a method for determining usability of a reagent.

### Description of Embodiments

Embodiments according to the disclosure will be described in detail with reference to the drawings. In the following embodiments, it is needless to mention that components (also including processing steps and the like) thereof are not necessarily essential unless otherwise specified or unless clearly considered to be essential in principle.

### [First Embodiment]

### <Configuration Example of Automatic analyzer>

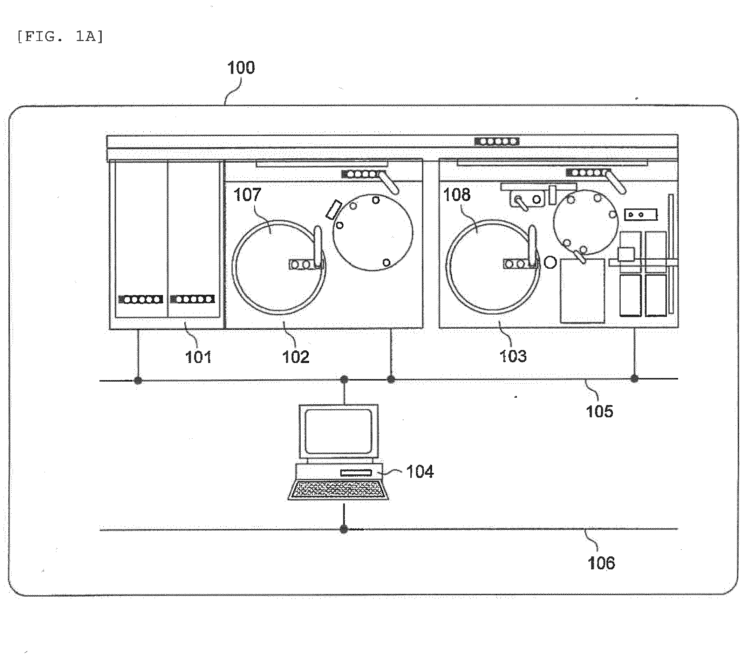

FIG. 1A is a schematic view illustrating a configuration example of an automatic analyzer 100. The automatic analyzer 100 includes a sample conveyance unit 101, analysis units 102 and 103, and a control device 104. The sample conveyance unit 101 and the analysis units 102 and 103 are connected to the control device 104 via a network 105, and operations thereof are controlled by the control device 104. The control device 104 can be connected to a system outside the automatic analyzer 100 via a network 106.

The sample conveyance unit 101 holds a plurality of sample containers and conveys the sample containers to the analysis units 102 and 103 using an actuator (not illustrated). The analysis unit 102 performs, for example, a colorimetric analysis on a reaction solution of a sample and a reagent. The analysis unit 103 performs, for example, an immune analysis on a reaction solution of a sample and a reagent. In this manner, the automatic analyzer 100 can include a plurality of analysis units having different measurement targets.

The analysis unit 102 includes a reagent placement mechanism 107. The analysis unit 103 includes a reagent placement mechanism 108. The reagent placement mechanisms 107 and 108 can accommodate a plurality of reagent containers to be used for an analysis. The analysis unit 102 includes a dispensing device that aspirates a reagent from a reagent container placed in the reagent placement mechanism 107 and dispenses the reagent into a reaction cell, and a dispensing device that aspirates a sample from a sample container and dispenses the sample into the reaction cell.Similarly, the analysis unit 103 includes a dispensing device that aspirates a reagent from a reagent container placed in the reagent placement mechanism 108 and dispenses the reagent into a reaction cell, and a dispensing device that aspirates a sample from a sample container and dispenses the sample into the reaction cell.

In the present embodiment, the automatic analyzer 100 including one sample conveyance unit 101 and two analysis units 102 and 103 is described as an example, but the number of sample conveyance units and the number of analysis units are not limited thereto, and may be one or more.

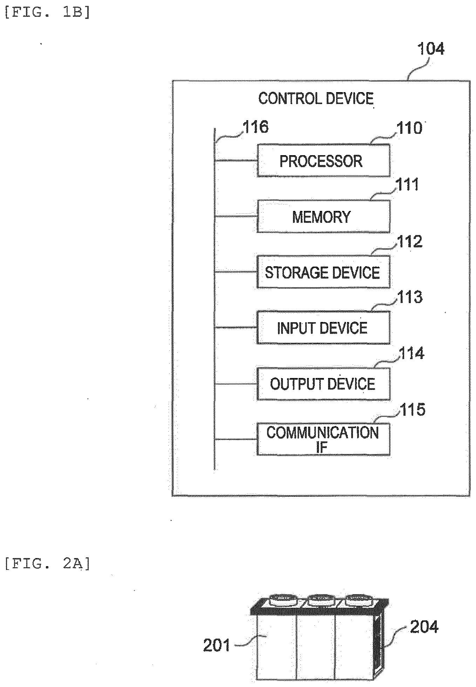

FIG. 1B is a diagram illustrating a hardware configuration of the control device 104. The control device 104 includes a processor 110, a memory 111, a storage device 112, an input device 113, an output device 114, and a communication interface 115. Components of the hardware of the control device 104 are connected to each other via a bus 116.

The processor 110 executes processing, functions, and/or methods to be implemented by using codes or instructions included in a program stored in the storage device 112. The processor 110 includes, for example, a central processing unit (CPU), a micro processing unit (MPU), a graphics processing unit (GPU), a microprocessor, a processor core, a multiprocessor, an application-specific integrated circuit (ASIC), and a field programmable gate array (FPGA), and implements predetermined processing by a logic circuit or a dedicated circuit formed in an integrated circuit (IC chip, LSI) or the like.

The memory 111 temporarily stores the program loaded from the storage device 112, and provides a work area to the processor 110. The memory 111 also temporarily stores various pieces of data generated while the processor 110 executes the program. The memory 111 includes, for example, a random access memory (RAM) and a read only memory (ROM).

The storage device 112 stores programs. The storage device 112 includes, for example, a hard disk drive (HDD), a solid state drive (SSD), and a flash memory.

The input device 113 receives input of various operations from a user and transmits information related to the input to the processor 110. The input device 113 includes, for example, hardware keys such as a touch panel, a touch display, and a keyboard, a pointing device such as a mouse, a camera (that receives operation input via an image), and a microphone (that receives operation input by voice).

The output device 114 outputs a processing result obtained by the processing by the control device 104 (processor 110). The output device 114 includes, for example, a touch panel, a touch display, a monitor, projection mapping, a hologram, a speaker (audio output), and a printer. The input device 113 and the output device 114 may be integrated with each other.

The communication interface 115 communicates with another information processing device via the network 106. The communication may be performed in a wired or wireless manner, and any communication protocol may be used as long as the communication can be performed therebetween. The communication interface 115 transmits various pieces of data to another information processing device according to an instruction from the processor 110. In addition, the communication interface 115 receives various pieces of data transmitted from another information processing device and transmits the data to the processor 110.

When the user inputs an instruction to start an analysis operation using the input device 113, the processor 110 operates each unit of the automatic analyzer 100, and the analysis unit 102 or 103 analyzes a sample according to an inspection item. When receiving an analysis result from the analysis unit 102 or 103, the processor 110 stores the analysis result in the storage device 112, configures a screen for displaying the analysis result, and displays the screen on the output device 114.

FIG. 2A is a perspective view illustrating a configuration example of a reagent container 201. The reagent container 201 has a shape in which three containers are coupled in a row. The reagent container 201 contains a liquid reagent necessary for measuring an inspection item. A barcode 204 is attached to or printed on a side surface of the reagent container 201. In the barcode 204, information (reagent information) unique to the reagent container is recorded, such as an identification number, a lot, an attribute (inspection item), a type, an initial remaining amount, and an expiration date of a reagent.

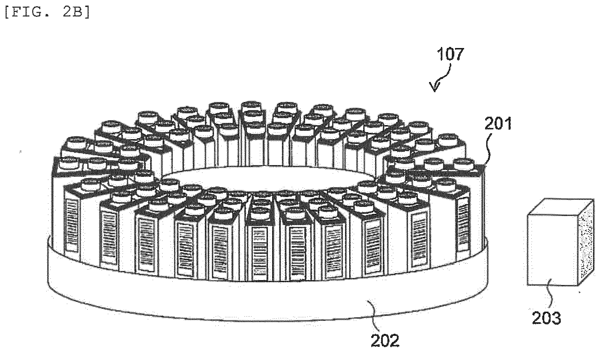

FIG. 2B is a perspective view illustrating a configuration example of the reagent placement mechanism 107. The reagent placement mechanism 107 includes a reagent disk 202 and a barcode reader 203. Although the reagent placement mechanism 107 is representatively illustrated in FIG. 2B, the reagent placement mechanism 108 also has the same configuration.

The reagent disk 202 has a substantially circular shape in a top view and is rotatable around a central axis. A plurality of reagent containers 201 can be placed on the reagent disk 202 along a circumferential direction.

The barcode reader 203 can read the reagent information recorded in the barcode 204 attached to the reagent container 201. When the user mounts the reagent container 201 on the reagent disk 202 and issues an instruction to perform reagent registration using the input device 113 of the control device 104, the processor 110 of the control device 104 rotates the reagent disk 202 and moves the reagent container 201 to a position at which the barcode 204 can be read by the barcode reader 203. The barcode reader 203 reads the reagent information from the barcode 204 and transmits the reagent information to the control device 104 via the network 105. The control device 104 received the reagent information causes the processor 110 to store the reagent information in the memory 111 or the storage device 112. The storage device 112 stores a management table for managing the reagent information, and the reagent information is registered in the management table. The reagent information registered in the management table is not deleted even when the reagent container 201 is removed from the reagent disk 202. The processor 110 can temporarily read the management table stored in the storage device 112 to the memory 111. The processor 110 determines usability of the reagent with reference to information related to usability of the reagent and stored in the memory 111 or the storage device 112. Details of processing of determining the usability of the reagent will be described later.

As a reagent information recognition method, an RFID and an RFID reader may be used instead of a method using the barcode 204 and the barcode reader 203. As a reagent information reading method, a method of sequentially reading the barcode 204 of each reagent container 201 by the rotation of the reagent disk 202 in a state in which necessary reagent containers 201 are all placed on the reagent disk 202 may be adopted, or a method of reading the barcode 204 of the reagent container 201 each time one reagent container 201 is placed on the reagent disk 202 may be adopted.

### <Setting of Usability of Reagent>

The control device 104 according to the present embodiment can read the reagent information registered in the management table of the storage device 112 in the past to the memory 111, display a list of reagent information on the output device 114, and set a specific reagent designated by the user via a display screen to be unusable. When the user inputs an instruction to access a reagent information management screen (a screen for setting usability of a reagent), the processor 110 configures a reagent management screen using data registered in the management table and displays the management screen on the output device 114.

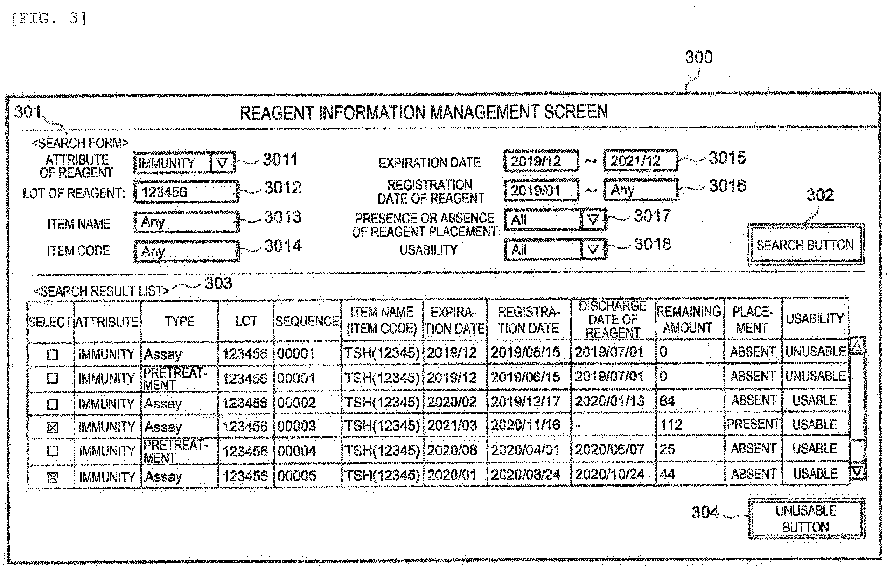

FIG. 3 is a schematic diagram illustrating an example of a reagent information management screen 300 (GUI screen) for setting usability of a specific reagent. The management screen 300 includes a search form 301, a search button 302, a search result list 303, and an unusable button 304.

The search form 301 is an area for designating conditions for searching for the reagent information. Boxes 3011 to 3018 are selection boxes or input boxes of search conditions of the reagent information. The selection, box 3011 can select, as an attribute of a reagent, an attribute of the reagent according to characteristics of an analysis unit, such as electrolyte, immunity, and colorimetry. The input box 3012 can designate a lot of a reagent. The input box 3013 can designate a name of an analysis item to be measured with a reagent. The input box 3014 can designate a code of an analysis item to be measured with a reagent. The input box 3015 can designate a range of an expiration date of a reagent. The input box 3016 can designate a range of a registration date when a reagent is registered in the automatic analyzer 100 for the first time. The selection box 3017 can designate, as a placement state of a reagent in the analysis unit, either or both of placing the reagent in the analysis unit ("present") or removing the reagent from the analysis unit ("absent"). The selection box 3018 can designate any one or both of "usable" or "unusable" as usability information of a reagent.

The search conditions illustrated in FIG. 3 are merely examples, and conditions other than the exemplified conditions can also be appropriately added as long as the conditions can limit information on the reagent. Each condition may not be designated or input, and a search condition that is not designated or input can be excluded from the search conditions of the reagent information. In FIG. 3, "Any" is displayed in boxes of search conditions that are not designated or input.

When the search button 302 is pressed, the processor 110 extracts reagent information matching the conditions designated in the search form 301 from the management table of the storage device 112, and displays an extracted result in the search result list 303.

The search result list 303 is an area for displaying a list of reagent information on reagents matching the conditions designated in the search form 301 in a table format. Each row of the search result list 303 includes reagent information on one reagent. In the first column of each row, a check box for the user to select a reagent is displayed. The second to twelfth columns correspond to data items of the reagent information registered in the management table of the storage device 112, respectively.

The unusable button 304 can set a reagent selected by a check box in the search result list 303 to be unusable. When the unusable button 304 is pressed, information for identifying the selected reagent is input to the processor 110, and the processor 110 updates the usability information in the management table on the selected reagent from "usable" to "unusable". In this manner, the automatic analyzer 100 according to the present embodiment can set not only a reagent currently mounted but also a reagent not currently mounted to be unusable.

As described above, the reagent set to be unusable is outside the automatic analyzer 100, and when the reagent is placed on the reagent disk 202 of the analysis unit 102 or 103 and the reagent information is re-registered by reading the barcode 204, the control device 104 performs control such that the reagent is regarded as unusable and cannot be used in the analysis. Specifically, for example, the processor 110 controls an operation of the dispensing device so as not to aspirate the reagent from the reagent container 201 containing the unusable reagent and mounted on the reagent disk 202. Additionally or alternatively, when an unusable reagent is placed on the reagent disk 202, the processor 110 may generate a warning display or an alarm indicating that the reagent cannot be used and output the warning display or the alarm from the output device 114. In this case, a text for prompting the user toremove the unusable reagent may be output to the output device 114.

### <Condition Setting of Reagent to be Set as Unusable>

In the management screen 300 of FIG. 3, it is described that the usability can be set for the reagent once registered in the management table of the storage device 112 (the reagent that has been placed on the reagent disk 202). The control device 104 according to the present embodiment can further set a condition of a reagent to beset as unusable in order to set usability of a reagent that is not registered. When the user inputs an instruction to access a condition management screen (setting screen) of a reagent to be set as unusable, the processor 110 configures a management screen illustrating the condition under which the reagent is set to be unusable and displays the management screen on the output device 114.

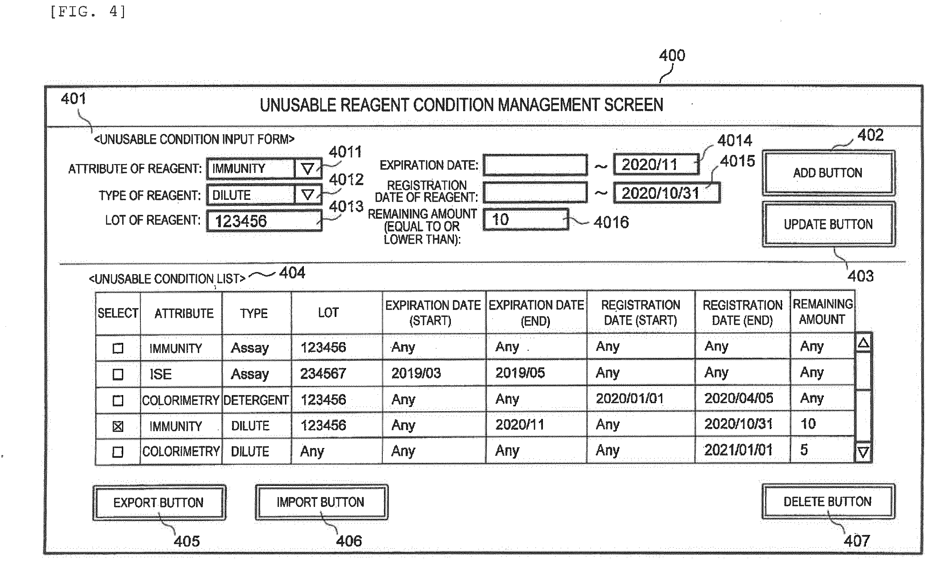

FIG. 4 is a schematic diagram illustrating an example of a management screen 400 (GUI screen) for managing conditions of a reagent to be set as unusable. The management screen 400 is a screen for adding, updating, deleting, and referring to conditions for determining that a reagent is unusable with respect to the reagent information read from the reagent container 201 placed on the reagent disk 202. The management screen 400 includes a condition input form 401, an add button 402, an update button 403, an unusable condition list 404, an export button 405, an import button 406, and a delete button 407.

The condition input form 401 is an area for inputting conditions of an unusable reagent, and boxes 4011 to 4016 are selection boxes or input boxes for designating conditions under which a reagent is set to be unusable. The conditions that can be input as illustrated in FIG. 4 are merely examples, and conditions other than the exemplified conditions can also be appropriately added as long as the conditions can limit information on the reagent. Each condition may not be designated or input. A condition that is not designated or input can be excluded from a target compared with reagent information registered by reading a barcode to determine usability of a reagent to be described later. However, one or more conditions need to be designated.

The selection box 4011 can designate an attribute of a reagent according to characteristics of an analysis unit using the reagent, such as electrolyte analysis, immune analysis, or colorimetric analysis. The selection box 4012 can designate a type of a reagent, such as a reagent for analysis (Assay) or for dilution, or a detergent. The input box 4013 can designate a lot of a reagent. The input box 4014 can designate a range of an expiration date of a reagent. The input box 4015 can designate a range of a registration date when a reagent is registered for the first time. The input box 4016 can designate a lower limit value of a liquid amount or the number of tests for a reagent.

When the add button 402 is pressed, the processor 110 adds, to the unusable condition list 404, conditions input to the condition input form 401 as new data.

The unusable condition list 404 is an area for displaying a list of unusable conditions registered from the condition input form 401. Each row of the unusable condition list 404 includes one unusable condition. In the first column of each row, a check box for the user to select a condition is displayed. The second to ninth columns correspond to data items of the unusable condition registered in an unusable condition table of the storage device 112, respectively.

The update button 403 can overwrite a condition selected by a check box in the unusable condition list 404 with a condition set in the condition input form 401 (update the unusable condition table). When the update button 403 is pressed, information for identifying the selected condition and information related to the condition set in the condition input form 401 are input to the processor 110, and the processor,110 updates the selected condition.

When the delete button 407 is pressed, the processor 110 deletes a condition selected by a check box in the unusable condition list 404 from the unusable condition table.

When the export button 405 is pressed, the processor 110 stores unusable conditions in the unusable condition list 404 in the storage device 112 as the unusable condition table, for example, in a table format. An output format of the unusable condition is not limited to the table format. The unusable condition may be stored in a storage medium other than the storage device 112 (for example, a storage device in a server device or the like outside the automatic analyzer 100).

When the import button 406 is pressed, the processor 110 can read an unusable condition from a storage medium such as the storage device 112 in a format of being output from the export button 405, temporarily store the unusable condition in the memory 111, and display the unusable condition in the unusable condition list 404. A method of taking in the unusable condition is not limited to the method of pressing the import button 406. For example, when a device or system outside the automatic analyzer 100 manages the unusable condition and delivers the unusable condition to the automatic analyzer, the communication interface 115 of the control device 104 may receive the unusable condition from the outside via the network 106, and the processor 110 may configure the unusable condition list 404 on the management screen 400.

### <Method for Determining Usability of Reagent>

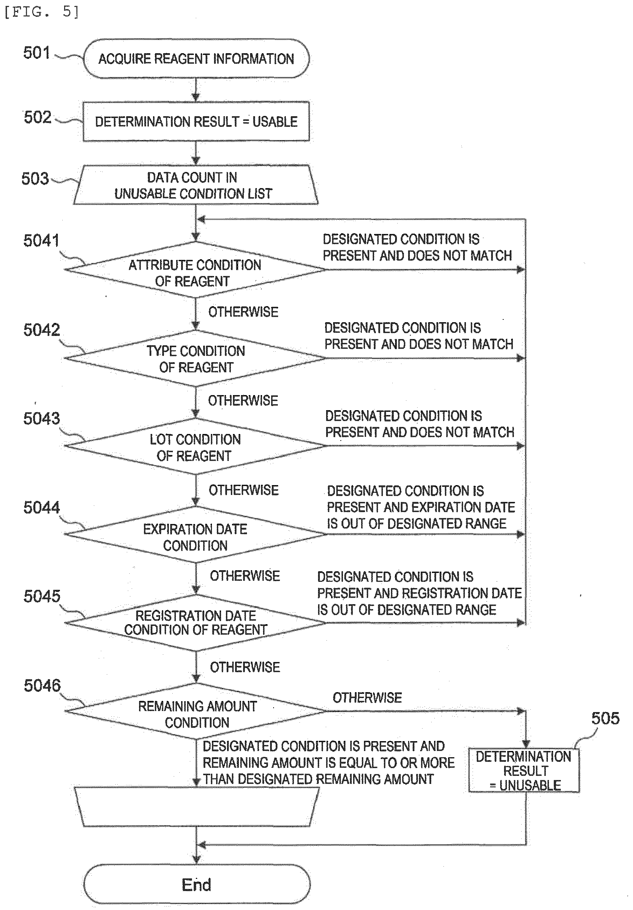

FIG. 5 is a flowchart illustrating a method for determining usability of a reagent placed on the reagent disk 202. The processor 110 of the control device 104 executes processing illustrated in FIG. 5 according to a program.

### (Step S501)

When the user mounts the reagent container 201 on the reagent disk 202 and issues an instruction to perform reagent registration using the input device 113 of the control device 104, the processor 110 of the control device 104 rotates the reagent disk 202 and moves the reagent container 201 to a position at which the barcode 204 can be read by the barcode reader 203. The barcode reader 203 reads reagent information (including at least information related to an attribute, a type, a lot, an expiration date, an initial registration date, and a remaining amount of a reagent) from the barcode 204, and transmits the reagent information to the control device 104 via the network 105. When acquiring the reagent information on a reagent as a determination target, the processor 110 of the control device 104 executes the following processing to determine the usability of the reagent.

### (Step S502)

The processor 110 substitutes "usable" for an initial value of a determination result variable serving as output information on usability determination in the present flowchart, and stores the initial value in the memory 111.

### (Step S503)

The processor 110 reads and stores the unusable condition list 404 in the memory 111, and repeats the following steps S5041 to S5046 for each row registered in the unusable condition list 404 (that is, for all the registered unusable conditions).

### (Step S5041)

The processor 110 compares attribute information among information on the reagent as a determination target with reagent attribute information registered in the unusable condition. When there is no designated attribute in the unusable condition or when the attribute information matches the designated condition, the processing proceeds to step S5042. When the attribute information does not match the designated condition, subsequent data in the unusable condition list is compared with the information on the reagent as a determination target.

### (Step S5042)

The processor 110 compares type information among the information on the reagent as a determination target with reagent type information registered in the unusable condition. When there is no designated type in the unusable condition or when the type information matches the designated condition, the processing proceeds to step S5043. When the type information does not match the designated condition, subsequent data in the unusable condition list is compared with the information on the reagent as a determination target from step S5041.

### (Step S5043)

The processor 110 compares lot information among the information on the reagent as a determination target with reagent lot information registered in the unusable condition. When there is no designated lot in the unusable condition or when the lot information matches the designated condition, the processing proceeds to step S5044. When the lot information does not match the designated condition, subsequent data in the unusable condition list is compared with the information on the reagent as a determination target from step S5041.

### (Step S5044)

The processor 110 compares expiration date information among the information on the reagent as a determination target with start and end information on an expiration date of the reagent registered in the unusable condition. When there is no designated start and end condition in the unusable condition or when the expiration date is within a range of the designated date in the unusable condition, the processing proceeds to step S5045. When the expiration date is out of the range of the designated unusable condition, subsequent data in the unusable condition list is compared with the information on the reagent as a determination target from step S5041.

### (Step S5045)

The processor 110 compares an initial registration date among the information on the reagent as a determination target with start and end information on an initial registration date of the reagent registered in the unusable condition. When there is no designated start and end condition in the unusable condition or when the initial registration date is within a range of the designated date, the processing proceeds to step S5045. When the initial registration date is out of the range of the designated condition, subsequent data in the unusable condition list is compared with the information on the reagent as a determination target from step S5041. When the reagent information on the reagent is already present in the management table, an initial registration date registered in the management table is used as the initial registration date for comparison. On the other hand, when the reagent information on the reagent is absent in the management table (when the reagent is a newly registered reagent), a comparison result in step S5045 is determined as having no designated condition.

### (Step S5046)

The processor 110 compares a remaining amount among the information on the reagent as a determination target with a remaining amount of the reagent registered in the unusable condition. When there is no designated remaining amount in the unusable condition or when the remaining amount is less than the designated remaining amount, the processing proceeds to step S505 and ends repetition in step S503. When the remaining amount is equal to or more than the designated remaining amount, subsequent data in the unusable condition list is compared with the information on the reagent as a determination target from step S5041.

The comparison in steps S5041 to S5046 is performed for all the unusable conditions in the unusable condition list, and when the reagent information on the reagent mounted on the reagent disk 202 does not match all the conditions, the processor 110 can proceed to the analysis operation since the reagent is usable.

### (Step S505)

The processor 110 substitutes "unusable" for the determination result variable stored in the memory 111, and outputs a determination result to the output device 114.

### <Conclusion of First Embodiment>

As described above, the automatic analyzer according to the present embodiment includes the reagent disk 202 (reagent placement unit) on which the reagent container 201 containing a reagent is placed, and the processor 110 that processes reagent information related to the reagent. The processor 110 can set both a reagent placed on the reagent disk 202 and a reagent not placed on the reagent disk 202 to be unusable. In this manner, a reagent removed from the automatic analyzer may be set to be unusable without being remounted and not to be used for an analysis of a sample. Accordingly, with respect to the reagent removed from the automatic analyzer and in storage, it is possible to register that the reagent, which is determined to be unusable for an analysis by a certain user for reasons such as a deficiency in a management method, is unusable. Further, even when a third party who does not know that the reagent is unusable places the reagent in the automatic analyzer again and starts the analysis, the reagent set to be unusable cannot be used. As a result, a loss of the sample due to an analysis using a problematic reagent can be prevented in advance.

The automatic analyzer according to the present embodiment can register in advance a condition of a reagent to be set as unusable in the automatic analyzer, and does not use the reagent corresponding to the unusable condition for an analysis. The unusable condition of the reagent can be set as unusable not only for a reagent that is used in the automatic analyzer, a condition of a reagent that has never been placed in the automatic analyzer can also be set as unusable. Accordingly, for example, when a deficiency is found in a lot of a reagent delivered from a reagent manufacturer, the lot of the reagent can be registered as an unusable condition, and a loss, which is caused by using the reagent of the lot in which a problem is found in the device, can be prevented in advance.

### [Modification]

The disclosure is not limited to the embodiment described above, and includes various modifications. For example, the-embodiment described above has been described in detail to facilitate understanding of the disclosure, and the disclosure does not necessarily include all the described configurations. A part according to one embodiment can be replaced with a configuration according to another embodiment. A configuration according to another embodiment can be added to a configuration according to one embodiment. A part of a configuration according to each embodiment may be added, deleted, or replaced with a part of a configuration according to another embodiment.

### Reference Signs List

100: automatic analyzer
101: sample conveyance unit
102, 103: analysis unit
104: control device
105, 106: network
107, 108: reagent placement mechanism
201: reagent container
202: reagent disk
203: barcode reader
300: reagent information management screen
400: unusable condition management screen

## Claims

1. An automatic analyzer comprising:
a reagent placement unit in which a reagent container containing a reagent is placed;
a processor configured to process reagent information related to the reagent;
a memory configured to store the reagent information; and
a display device configured to display the reagent information, wherein
the processor causes the display device to display a GUI screen configured to allow setting of usability of both a reagent placed in the reagent placement unit and a reagent not placed in the reagent placement unit, and causes the memory to store information received from the GUI screen and related to the usability of the reagent.

2. The automatic analyzer according to claim 1, wherein
the processor acquires reagent information related to the reagent in the reagent container placed in the reagent placement unit, compares the acquired reagent information with information related to usability of the reagent stored in the memory, and determines whether an analysis operation using the reagent is performable.

3. The automatic analyzer according to claim 1, wherein
the processor causes the GUI screen to display a list of the reagent information related to the reagent in the reagent container, which is placed in the reagent placement unit and includes a reagent container removed from the reagent placement unit.

4. The automatic analyzer according to claim 3, wherein
the GUI screen is configured to allow setting of the usability for each reagent container placed in the reagent placement unit and displayed in the list.

5. The automatic analyzer according to claim 1, wherein
the GUI screen is configured to allow a condition of the reagent to be set as unusable, and the processor stores the condition in the memory.

6. The automatic analyzer according to claim 5, wherein
the GUI screen is configured to allow a condition of the reagent not placed in the reagent placement unit to be set as unusable.

7. The automatic analyzer according to claim 5, wherein
the processor determines usability of the reagent in the reagent container placed in the reagent placement unit based on the condition, and
when the reagent satisfies the condition, use of the reagent is prohibited during an analysis operation.

8. The automatic analyzer according to claim 5, wherein
the processor is configured to allow the condition stored in the memory to be exportable to a storage device.

9. The automatic analyzer according to claim 5, wherein
the processor is configured to import the condition stored in a storage device outside the automatic analyzer and allow the condition to be stored in the memory.

10. A reagent management method executed by a processor of an automatic analyzer, the reagent management method comprising:
causing, by the processor, a display device of the automatic analyzer to display a GUI screen, the GUI screen being configured to allow setting of usability of both a reagent placed in a reagent placement unit and a reagent not placed in the reagent placement unit; and
causing, by the processor, a memory to store information received from the GUI screen and related to the usability of the reagent.
